# FASCICULE DE BREVET EUROPEEN

(11) **EP 0 412 862 B1**
(45) Date de publication et mention de la délivrance du brevet: **14.09.1994**
(21) Numéro de dépôt: 90401967.6
(22) Date de dépôt: 06.07.1990
(51) Int. Cl.: C10G 25/00

(54) **Masse de captation à base de nickel pour l'élimination de l'arsenic et du phosphore contenus dans les coupes d'hydrocarbures liquides, sa préparation et son utilisation**
Auf Nickel basierende Adsorbens für Entfernung von Arsen und Phosphor auf flüssigen Kohlenwasserstofffraktionen, dessen Herstellung und Anwendung
Nickel-based adsorbens for arsenic and phosphor removal from liquid hydrocarbon fractions, its preparation and its use

(30) Priorité: 08.08.1989 FR 8910756
(43) Date de publication de la demande: 13.02.1991
(73) Titulaire: INSTITUT FRANCAIS DU PETROLE, 92506 Rueil Malmaison Cédex (FR)
(72) Inventeur: Boitiaux, Jean-Paul, F-78300 Poissy (FR); Courty, Philippe, F-78800 Houilles (FR); Sarrazin, Patrick, F-92500 Rueil-Malmaison (FR)

(56) Documents cités:
- EP-A- 0 239 687
- FR-A- 2 617 497
- FR-A- 2 619 121
- GB-A- 1 144 497

## Description

L'invention concerne une masse de captation notamment pour éliminer l'arsenic et/ou le phosphore d'une charge pétrolière, son procédé de préparation et son utilisation.

Les pétroles bruts, selon leurs origines, peuvent contenir de nombreux composés métalliques à l'état de traces, généralement présentes sous forme de complexes organométalliques.

Ces composés organométalliques sont des poisons des catalyseurs utilisés dans les procédés de transformation du pétrole.

Les composés organométalliques se trouvent principalement dans les coupes lourdes provenant de la distillation du brut pétrolier. Plus particulièrement, les coupes lourdes provenant de la distillation sous vide contiennent de nombreux métaux tels que nickel, vanadium, arsenic ainsi que des éléments non métalliques tels que le phosphore. Toutefois les composés organiques du phosphore seront par extension également nommés organométalliques puisque le phosphore y est présent à l'état cationique. Ces coupes lourdes subissent habituellement des traitements de craquage thermique ou catalytique pour les convertir en coupes d'hydrocarbures plus légers, insaturés, mieux valorisables.

Généralement les métaux tels que nickel et vanadium ne se retrouvent pas dans les effluents, en revanche, l'arsenic, beaucoup plus apte à former des composés volatils, se retrouve dans les coupes plus légères telles que les coupes C₂ et C₃ contenant l'éthylène et le propylène que l'on purifie généralement par hydrogénation sélective sur des catalyseurs à base de métaux nobles qui sont respectivement empoisonnés par les composés réducteurs de l'arsenic tels que par exemple l'arsine et la méthylarsine.

Le brevet français 2619120 enseigne qu'il est possible d'absorber en phase gazeuse ou en phase liquide ces composés réducteurs sur de l'oxyde de plomb déposé sur alumine par exemple.
En revanche, si l'on désire traiter des coupes plus lourdes telles que essence ou naphta, les arsines normalement présentes ont un point d'ébullition plus élevé que la méthylarsine et comportent donc un ou plusieurs radicaux hydrocarbonés dans leur molécule. De tels composés ont un pouvoir réducteur beaucoup plus faible et les réactions de réduction de l'oxyde de plomb ne se produisent pas de façon complète. Les masses d'absorption contenant des oxydes de métaux tels que l'oxyde de plomb sont donc inopérants sur de telles coupes hydrocarbonées liquides. Il en est de même pour les composés organiques du phosphore qui ne peuvent être éliminés de cette façon. Le brevet FR 2617497 propose alors d'utiliser une masse absorbante comprenant du nickel déposé sur un support tel que la silice, la magnésie ou l'alumine. Il s'avère cependant que ces masses de captation sont d'une efficacité limitée ainsi que d'une stabilité limitée lors de leur régénération.

Enfin, l'art antérieur peut être illustré par les demandes de brevets GB-A-1144 497, EP-A-0239 687 et FR-A-2619 121.

L'objet de la présente invention est une masse de captation, notamment pour éliminer l'arsenic et/ou le phosphore, à base de nickel éventuellement associé à un autre métal tel que le palladium ou le platine, qui soit plus efficace que celles antérieurement connues.

Un autre objet est une masse de captation régénérable et stable, c'est-à-dire dont l'efficacité est restaurée par des traitements de calcination à haute température (entre 300 et 600 °C en général et de préférence 450 - 530 °C) sous air ou sous un mélange d'air et d'azote ou d'air et de vapeur d'eau pendant 4 à 12 heures.

L'invention concerne donc une masse de captation, notamment pour éliminer l'arsenic et/ou le phosphore d'une charge pétrolière, caractérisée en ce qu'elle comprend, en poids :
a) de 60 à 97 % d'un support poreux renfermant, en poids :
   - de 40 à 98,5 % d'au moins une alumine
   - de 1,5 à 60 % d'oxyde d'au moins un métal A dissous dans l'alumine sous forme d'aluminate et choisi dans le groupe formé par Mg, Ca, Sr, Ba, Mn, Fe, Co, Ni, Cu et Zn ;
b) de 3 à 40 % d'oxyde de nickel imprégné par échange ou par dépôt sur le support et non transformé en aluminate.

Selon une caractéristique de l'invention, la masse de captation peut comporter, en outre, de 0 à 1 % en poids (comptés en PtO₂) d'oxyde de platine et/ou (comptés en PdO) d'oxyde de palladium imprégné par échange ou par dépôt sur le support et de préférence de 0,2 à 0,5 %.

Selon une autre caractéristique particulièrement avantageuse, la masse de captation de l'arsenic et/ou du phosphore peut comprendre, en poids :
a) de 65 à 90 % dudit support, renfermant :
   - de 60 à 96 % de ladite alumine,
   - de 4 à 40 % dudit oxyde de métal A ;
b) de 10 à 35 % d'oxyde de nickel imprégné sur ledit support.

L'alumine du support est avantageusement une alumine α ou γ ou un mélange des deux.

Cette alumine a une porosité généralement comprise entre 20 et 150 cm³/g, de préférence entre 50 et 120 cm³/g, et une surface spécifique généralement comprise entre 10 et 300 m²/g et de préférence entre 70 et 200 m²/g.

Selon une autre caractéristique de l'invention, la masse de captation, en vue de sa mise en oeuvre, peut être soumise à un traitement de réduction sous hydrogène à une température de 100 à 500 °C, de façon à ce qu'au moins 10 % et de façon préférée, au moins 50 % dudit oxyde de nickel soit sous forme métal.

Selon une caractéristique du procédé d'utilisation de la masse de captation selon l'invention, les conditions opératoires de l'absorption sont modérées, à savoir une température de 110 à 280 °C, de préférence 150 à 220 °C et une pression de 1 à 100 bars, de préférence 5 à 50 bars. On opère en atmosphère hydrogène, la charge étant de préférence en phase liquide, au moins pour partie.

Cette charge peut être un naphta bouillant en général entre 40 et 200 °C ou un condensat lourd de gaz liquéfiés bouillant par exemple entre 20 et 480 °C.

Il a été, en effet, trouvé que, de façon surprenante, le fait de déposer le nickel actif sur un support alumineux où l'alumine, au moins en partie, est combinée sous forme d'aluminate, rend le nickel très sensiblement plus actif, ainsi que plus stable lors de la régénération de la masse par combustion.

Les aluminates utilisés peuvent être les aluminates de magnésium, de calcium, de strontium, de baryum, de manganèse, de fer, de cobalt, de nickel, de cuivre, de zinc, ainsi que les aluminates mixtes, par exemple ceux comprenant au moins deux des métaux A de la liste précitée.

On préfèrera les aluminates simples ou encore les aluminates mixtes, de magnésium, de calcium, de cobalt, de nickel et de zinc, et d'une façon encore plus préférée l'aluminate de nickel.

Les aluminates précités répondent généralement à la stoechiométrie (A Al₂O₄, n Al₂O₄) où n varie de 0 à 10 et où A est au moins un des métaux de la liste précitée.

Les aluminates précités seront généralement préparés par au moins l'un des procédés décrits ci-après.

Il peut s'agir :
a) D'aluminates obtenus par imprégnation d'un support d'alumine par une solution aqueuse, ou encore non aqueuse, d'au moins un sel d'au moins un métal A de la liste précitée ; séchage, puis activation thermique entre 750 et 800°C, afin de combiner au moins pour partie l'alumine dudit support et au moins un métal A et de former ledit aluminate.
   Le support d'alumine peut avantageusement être utilisé préformé ; par exemple sous forme de billes, obtenues par dragéification ou encore par coagulation en gouttes (oil-drop, oil-up) ou encore, par exemple, sous forme d'extrudés obtenus par toute technique d'extrusion connue de l'homme de métier.
b) D'aluminates massiques obtenus par hydrolyse d'au moins un alcoxyde d'aluminium et d'au moins un alcoxyde d'au moins un métal A de la liste précitée. A titre d'exemple, la procédure décrite dans USP 3,297,414 peut ainsi être utilisée.
c) D'aluminates massiques obtenus plus généralement par réaction d'au moins un composé d'aluminium et d'au moins un composé d'au moins un métal A afin de former un sol puis un hydrogel selon le procédé sol-gel, décrits par exemple dans les brevets USP 4,018,834, USP 4,482,643, USP 3,408,159, USP 4,357,427, GB 1,296,049, GB 1,313,750.
d) D'aluminates massiques obtenus par coprécipitation comme décrit, par exemple, dans le brevet français 2.523.957 de la demanderesse, à partir d'une solution aqueuse comprenant au moins un sel d'aluminium, au moins un sel d'au moins un métal A de la liste précitée que l'on fait réagir avec au moins un carbonate et/ou au moins un hydroxyde d'au moins un métal alcalin ou d'ammonium.
e) D'aluminates massiques obtenus par complexation, comme décrit, par exemple, dans les brevets français 1.604.707 et 2.045.612 de la demanderesse.
   Les aluminates sous forme de composé intermédiaire, préparés selon l'une des procédures a) à e) ci-avant sont éventuellement lavés, afin de les débarrasser si nécessaire des ions gênants qu'ils contiennent (alcalins, nitrates, autres anions...), puis ils sont séchés et enfin activés thermiquement.
   Il peut enfin s'agir :
f) D'aluminates industriels tels que par exemple les ciments alumineux de type aluminate de calcium ou encore aluminate de baryum commercialisés par la société française LAFARGE ou encore par exemple les aluminates de strontium, de magnésium ou de zinc, ou encore les aluminates mixtes industriels comprenant au moins deux des métaux A de la liste précitée, tels que par exemple les aluminates mixtes de calcium et de baryum.
g) De mélanges physiques d'au moins deux des composés selon a) à f) ci-avant qui sont ultérieurement mis en forme.

Les aluminates obtenus selon au moins l'une des procédures a) à g) précitées, à l'exception de ceux obtenus, selon a) par imprégnation d'un support d'alumine préformé, seront généralement mis en forme.

Les procédures de mise en forme sont l'agglomération en billes (dragéification), l'extrusion, le pastillage, la coagulation en gouttes (oil-drop, oil-up) et le séchage par atomisation (spray-drying) pour l'obtention de micrograins.

Elles peuvent être appliquées soit au produit humide, soit au produit séché, soit au produit activé thermiquement, soit encore au mélange d'au moins deux de ces produits.

De même que pour les procédures de mise en forme, les conditions de préparation desdits aluminates sont suffisamment connues de l'homme de métier pour qu'il ne soit pas nécessaire de les répéter dans le cadre de la présente invention.

Les activations thermiques ci-dessus mentionnées sont généralement réalisées entre 750 et 800°C.

La quantité d'oxyde de métal dissous dans l'alumine sous forme d'aluminate peut être contrôlée par diffraction X.

La proportion d'alumine combinée sous forme d'aluminate d'au moins un métal A sera telle que A/Al₂O₃ = 0,05 à 1, et préférentiellement 0,1 à 1 en atomes.

Le dépôt de nickel sur le support aluminate peut se faire de toute manière convenable, telle qu'il est connu de l'homme de métier, par exemple à partir d'un de ses sels solubles comme, par exemple, le nitrate, le formiate, l'acétate, l'acétylacétonate. Le nitrate est généralement préféré à cause de sa très grande solubilité dans l'eau. L'incorporation de nickel peut se faire par exemple par imprégnation "à sec" (remplissage de la porosité du support avec un volume de liquide égal au volume poreux du support) à partir d'une solution de nitrate de nickel de manière à obtenir, sur la masse absorbante, un pourcentage en poids de métal de 3 à 50 % et de préférence de 10 à 40 % compté en nickel. Après cette imprégnation, le catalyseur est séché pour éliminer au moins une partie de l'eau, puis calciné à l'air ou sous autre atmosphère contenant de l'oxygène à une température comprise entre 300 et 600 °C durant 0,5 à 5 heures.

Pour la mise en oeuvre de la masse de captation, aussi bien avant sa première utilisation qu'après sa régénération, on la soumet alors à une réduction sous hydrogène moléculaire ou sous une autre atmosphère contenant de l'hydrogène telle qu'un mélange azote-hydrogène, argon-hydrogène ou encore hélium-hydrogène à une température de 100 à 500°C.

On peut également déposer un mélange de sels de métaux tels que palladium et/ou platine en association avec le sel de nickel.

Ces sels seront avantageusement les chlorures, nitrates ou acétylacétonates. La quantité du métal associé (palladium et/ou platine) imprégné sur la masse absorbante sera comprise entre 0,1 et 5 % poids et de préférence entre 0,3 et 1 % poids.

Après cette imprégnation, le catalyseur est séché , puis calciné et enfin réduit dans les mêmes conditions que celles décrites ci-dessus.

La masse absorbante, une fois réduite, est mise au contact de toute manière appropriée avec la charge à purifier. On peut, par exemple, opérer en lit fixe dans une colonne d'absorption de forme cylindrique dans laquelle circule de manière ascendante ou descendante le naphta à décontaminer.

Le volume de masse absorbante sera utilement calculé en fonction de la concentration en arsenic de la charge hydrocarbonée, généralement comprise entre 0,05 et 10 ppm poids et avantageusement comprise entre 0,1 et 1 ppm poids dans le cas d'un naphta. Elle sera également calculée en fonction de la concentration en phosphore de la charge d'hydrocarbures qui peut contenir de 0,05 à 10 ppm de phosphore et avantageusement de 0,1 à 1 ppm. De façon générale, on opère à des débits horaires volumiques liquides LHSV rapportés au volume de masse compris entre 1 et 10 h⁻¹ et avec un débit horaire d'hydrogène de 0,5 à 10 litres par litre de charge. On a obtenu d'excellents résultats avec des valeurs de débits horaires (LHSV) et des valeurs de débit horaire d'hydrogène respectivement compris entre 5 et 10 h⁻¹ et 1 et 5 litres par litre de charge.

Les exemples suivants, donnés à titre non limitatif, illustrent l'invention.

### Exemple 1 (comparaison).

Dans cet exemple, on prépare une masse absorbante sur support d'alumine de transition gamma. La surface spécifique est de 160 m²/g et son volume poreux total est de 1,1 cm³/g.

Le volume macroporeux (pores supérieurs à 0,1 micromètres) est égal à 0,4 cm³/g.

100 g de billes de ce support, d'un diamètre moyen de 2 mm, sont imprégnées par une solution de nitrate de nickel d'un volume de 110 cm³ et contenant 20 g de nickel. Après imprégnation, la masse obtenue est séchée à 120 °C pendant 4 heures, puis calcinée sous air à pression atmosphérique à 450 °C pendant 2 heures.

On dépose 50 cm³ de la masse absorbante dans un tube en acier de 3 cm de diamètre.

On soumet alors la masse à un traitement de réduction dans les conditions suivantes :
- gaz réduction : hydrogène,
- débit de gaz : 20 litres/heure,
- pression : 2 bars,
- température : 400 °C,
- durée : 8 heures.

On laisse ensuite refroidir le lit de masse de captation, ayant été soumis à l'étape de réduction, jusqu'à la température de test, soit 180 °C.

On fait alors passer en flux ascendant une charge constituée d'un naphta bouillant dans la gamme 50 - 180 °C, contenant 500 ppm de soufre et auquel on a ajouté 400 ppb d'arsenic sous la forme de triéthylarsine.

Les conditions opératoires sont les suivantes :
- température : 180 °C,
- pression : 25 bars,
- débit de charge : variable : 200, 300, 400 cm³/h,
- débit d'hydrogène : variable : 1, 1,5, 2,0 l/h.

On détermine dans chaque condition la teneur en arsenic dans le produit sortant au bout de 300 et 600 heures.

Les résultats sont présentés dans le tableau 1.

**Tableau 1**

| Débit de naphta cm³/h | Arsenic dans le produit en ppb | |
|---|---|---|
| | après 300 h | après 600 h |
| 200 | <50 | <50 |
| 300 | <50 | 325 |
| 400 | 150 | 400 |

On voit que la masse ne conserve une efficacité réelle que si on limite le débit de naphta à 200 cm³/h, soit LHSV = 4 h⁻¹.

### Exemple 2 (comparaison).

Après chaque essai de 600 heures, on purge la colonne d'absorption de tout le naphta qu'elle contient puis on soumet la masse à une "régénération" sous une atmosphère oxydante air - vapeur d'eau dans les conditions suivantes :
- pression : 1 bar,
- température : 460 °C,
- débit de vapeur : 500 g/h,
- débit d'air : 15 l/h.

Le traitement est effectué pendant 8 heures.

Après ce traitement oxydant, on soumet à nouveau la masse absorbante à un traitement réducteur comme dans l'exemple précédent, puis on renouvelle l'absorption d' arsenic contenu dans le naphta précité, dans des conditions identiques.

Les résultats d'analyse d'arsenic au bout de 150 heures sont reportés dans le tableau 2.

**Tableau 2**

| Débit de naphta cm³/h | Arsenic dans le produit en ppb |
|---|---|
| 200 | 180 |
| 300 | 300 |
| 400 | 450 |

On peut voir que le traitement oxydant n'a pas permis de régénérer la masse absorbante de façon satisfaisante.

### Exemple 3 (selon l'invention).

On imprègne 200 g de l'alumine utilisée à l'exemple 1 ci-dessus par 220 cm³ d'une solution de nitrate de magnésium contenant 10 g de magnésium. On sèche la masse obtenue à 120 °C pendant 4 heures, puis on la calcine sous air à pression atmosphérique pendant 2 heures à 600 °C. Le solide obtenu est noté solide A. On prépare à partir de 100 g de ce solide A un nouveau solide B en l'imprégnant d'une solution contenant 20 g de nickel sous forme de nitrate et en le soumettant aux mêmes étapes de séchage et de calcination que celles de l'exemple 1.

Un solide C est préparé de la façon suivante : on imprègne 200 g de l'alumine utilisée ci-dessus avec 220 cm³ de solution de nitrate de nickel contenant 10 g de nickel ; on sèche la masse obtenue à 120 °C pendant 4 heures, puis on la calcine sous air à pression atmosphérique pendant 2 heures à 750 °C.

On prépare à partir de 100 g de ce solide C un nouveau solide D en l'imprégnant d'une solution contenant 20 g de nickel sous forme de nitrate. On le soumet alors aux mêmes traitements de séchage et calcination que dans l'exemple 1.

On prépare à partir de 100 g du solide C un nouveau solide E en l'imprégnant d'une solution contenant 20 g de nickel et 0,5 g de palladium sous forme de nitrates. On le soumet alors aux mêmes traitements de séchage et calcination que dans l'exemple 1.

Un solide F est préparé de la façon suivante : on imprègne 200 g de l'alumine utilisée ci-dessus avec 220 cm³ de solution de nitrate de nickel contenant 4 g de nickel ; on sèche la masse obtenue à 120 °C pendant 4 heures, puis on la calcine sous air à pression atmosphérique pendant 2 heures à 750 °C.

On prépare à partir de 100 g de ce solide F, un nouveau solide G en l'imprégnant d'une solution contenant 20 g de nickel sous forme de nitrate. On le soumet aux mêmes traitements de séchage et calcination que dans l'exemple 1.

Enfin, on prépare à partir de 100 g du solide C, un nouveau solide H en l'imprégnant d'une solution contenant 10 g de nickel sous forme de nitrate. On le soumet aux mêmes traitements de séchage et calcination que dans l'exemple 1.

Les analyses de diffraction X montrent que sensiblement tout le magnésium du solide A, et sensiblement tout le nickel des solides C et F, sont sous forme d'aluminate. On effectue avec les solides A, B, C, D, E, G, H, le même test que dans l'exemple 1 après les avoir réduits de la même manière.

La composition de ces solides est présentée dans le tableau 3.

**Tableau 3**

| Solide | Support | | Oxyde de Ni | Oxyde de Pd |
|---|---|---|---|---|
| | Oxyde de métal A | Alumine | | |
| A | 7,8 % + 92,2 % (100 %) | | | |
| B | 7,8 % + 92,2 % (79,6 %) | | 20,4 % | |
| C | 6 % + 94 % (100 %) | | | |
| D | 6 % + 94 % (80 %) | | 20 % | |
| E | 6 % + 94 % (79,4 %) | | 20,1 % | 0,5 % |
| F | 2,4 % + 97,6 % (100 %) | | | |
| G | 2,4 % + 97,6 % (80 %) | | 20 % | |
| H | 6 % + 94 % (91 %) | | 9 % | |

Les analyses d'arsenic effectuées après 10 heures, 300 heures et 600 heures sont présentées dans le tableau 4 suivant.

**Tableau 4**

| Solide | Débit de naphta cm³/h | Arsenic dans le produit en ppb | | |
|---|---|---|---|---|
| | | après 10 h | après 300 h | après 600 h |
| A | 200 | 400 | 400 | 400 |
| | 300 | 400 | 400 | 400 |
| | 400 | 400 | 400 | 400 |
| B | 200 | <50 | <50 | <50 |
| | 300 | <50 | <50 | <50 |
| | 400 | <50 | <50 | 220 |
| C | 200 | 400 | 400 | 400 |
| | 300 | 400 | 400 | 400 |
| | 400 | 400 | 400 | 400 |
| D | 200 | <50 | <50 | <50 |
| | 300 | <50 | <50 | <50 |
| | 400 | <50 | <50 | 180 |
| E | 200 | <50 | <50 | <50 |
| | 300 | <50 | <50 | <50 |
| | 400 | <50 | <50 | 85 |
| G | 200 | <50 | <50 | <50 |
| | 300 | <50 | <50 | <50 |
| | 400 | 100 | 120 | 250 |
| H | 200 | <50 | <50 | <50 |
| | 300 | <50 | <50 | <50 |
| | 400 | 200 | 250 | 400 |

On voit que ni le solide A, ni le solide C ne sont capables, même initialement, d'éliminer l'arsenic contenu dans le naphta. En revanche, les solides B, D, E sont nettement plus efficaces que les masses au nickel déposées sur alumine non modifiée.

On voit également que le solide G préparé avec un support peu aluminaté est moins performant.

### Exemple 4 (selon l'invention).

Après chaque essai de 600 heures, on soumet les solides B, D, E, G, H au même traitement de "régénération" oxydante sous vapeur d'eau que dans l'exemple 2. On renouvelle le test d'absorption de l'arsenic, les résultats d'analyse de l'effluent au bout de 150 heures sont reportés dans le tableau 5 ci-après.

**Tableau 5**

| Solide | Débit de naphta cm³/h | Arsenic dans le produit ppm |
|---|---|---|
| B | 200 | <50 |
| | 300 | <50 |
| | 400 | 90 |
| D | 200 | <50 |
| | 300 | <50 |
| | 400 | 80 |
| E | 200 | <50 |
| | 300 | <50 |
| | 400 | <50 |
| G | 200 | <50 |
| | 300 | 200 |
| | 400 | 400 |
| H | 200 | <50 |
| | 300 | 300 |
| | 400 | 400 |

On voit que contrairement à l'exemple 2 le traitement de régénération a permis de prolonger l'efficacité des masses d'absorption B, D et E. En revanche, la masse G avec peu d'aluminate est moins efficace.

### Exemple 5 (comparaison).

On réalise une série de tests dans lesquels on traite un naphta bouillant dans la gamme des points d'ébullition 50 à 180 °C contenant 500 ppm de soufre et dans lequel on a ajouté 500 ppb poids de phosphore sous forme de triéthylphosphine. On dispose 50 cm³ de la masse de l'exemple 1 dans un tube en acier de 3 cm de diamètre et on la soumet à un traitement sous hydrogène dans les conditions suivantes :
- pression : 2 bars,
- débit d'hydrogène : 20 litres/heure,
- température : 400 °C,
- durée : 8 heures.

La charge dont il faut éliminer le phosphore est passée en flux ascendant avec de l'hydrogène à travers le lit de masse dans les conditions suivantes :
- débit de charge : 200 cm³/h et 400 cm³/h
- température : 180 °C,
- pression : 25 bars,
- débit d'hydrogène : 1 litre/heure et 2 litres/heure.

On détermine dans chaque condition de test la teneur en phosphore dans le produit sortant au bout de 100 et 450 heures. Les résulats sont présentés dans le tableau 5 suivant.

**Tableau 5**

| Débit de naphta cm³/h | Phosphore dans le produit en ppb | |
|---|---|---|
| | après 100 h | Après 450 h |
| 200 | <100 | <100 |
| 400 | 225 | 500 |

Il est donc avantageux de limiter le débit de naphta à 200 cm³/h.

### Exemple 6 (comparaison).

Après chaque essai de 450 heures, on soumet la masse à un traitement de "régénération" identique à celui de l'exemple 2, puis on soumet à nouveau la masse absorbante à un traitement réducteur comme dans l'exemple 1 et l'on renouvelle l'absorption de phosphore contenu dans le naphta et dans des conditions identiques à l'exemple précédent.

Les résultats d'analyse de phosphore au bout de 100 heures sont reportés dans le tableau 6 ci-après.

**Tableau 6**

| Débit de naphta cm³/h | Phosphore dans le produit en ppb |
|---|---|
| 200 | 240 |
| 400 | 500 |

### Exemple 7 (selon l'invention).

Les solides A, B, C, D, E, G de l'exemple 3 sont testés de la même façon que dans l'exemple 6. Les analyses de phosphore dans le produit sont présentées après 10 heures et 400 heures dans le tableau 7.

**Tableau 7**

| Solide | Débit de naphta cm³/h | Phosphore dans le produit en ppb | |
|---|---|---|---|
| A | 200 | 500 | 500 |
| | 400 | 500 | 500 |
| B | 200 | <100 | <100 |
| | 400 | <100 | 200 |
| C | 200 | 500 | 500 |
| | 400 | 500 | 500 |
| D | 200 | <100 | <100 |
| | 400 | <100 | 150 |
| E | 200 | <100 | <100 |
| | 400 | <100 | <100 |
| G | 200 | <100 | <100 |
| | 400 | <100 | 180 |
| H | 200 | <100 | <100 |
| | 400 | 150 | 300 |

On voit que ni le solide A, ni le solide C ne sont capables même initialement d'éliminer le phosphore contenu dans le naphta. En revanche, les solides B, D, E et dans une moindre mesure les solides G et H sont plus efficaces que les masses de nickel déposées sur alumine non modifiée.

### Exemple 8 (selon l'invention).

Après chaque essai de 400 heures, on soumet les solides B, D, E, G, H au même traitement de régénération que dans l'exemple 2. On renouvelle, après nouvelle réduction, le test d'absorption du phosphore. Les résultats d'analyse du produit au bout de 120 heures sont reportées dans le tableau 8 ci-dessous.

**Tableau 8**

| Solide | Débit de naphta cm³/h | Phosphore dans le produit en ppb |
|---|---|---|
| B | 200 | <100 |
| | 400 | 150 |
| D | 200 | <100 |
| | 400 | 100 |
| E | 200 | <100 |
| | 400 | <100 |
| G | 200 | <100 |
| | 400 | 120 |
| H | 200 | <100 |
| | 400 | 300 |

On voit que le traitement de régénération permet de prolonger l'efficacité de la masse d'absorption du phosphore.

## Revendications

1. Masse de captation, notamment pour éliminer l'arsenic et/ou le phosphore d'une charge pétrolière, caractérisée en ce qu'elle comprend, en poids :
a) de 60 à 97 % d'un support poreux renfermant en poids :
- de 40 à 98,5 % d'au moins une alumine ,
- de 1,5 à 60 % d'oxyde d'au moins un métal A dissous dans l'alumine sous forme d'aluminate et choisi dans le groupe formé par Mg, Ca, Sr, Ba, Mn, Fe, Co, Ni, Cu et Zn ;
b) de 3 à 40 % d'oxyde de nickel imprégné par échange ou par dépôt sur le support et non transformé en aluminate,

2. Masse de captation selon la revendication 1, caractérisée en ce qu'elle comprend, en outre de 0 à 1 % en poids d'oxyde de platine et/ou d'oxyde de palladium imprégné par échange ou par dépôt sur le support.

3. Masse de captation selon la revendication 1 ou 2, caractérisée en ce qu'elle comprend, en poids :
a) de 65 à 90 % dudit support, renfermant :
- de 60 à 96 % de ladite alumine,
- de 4 à 40 % dudit oxyde de métal A ;
b) de 10 à 35 % d'oxyde de nickel imprégné sur ledit support.

4. Procédé de préparation de la masse de captation selon l'une des revendications 1 à 3, caractérisé en ce qu'on prépare un support renfermant de l'alumine et un aluminate au moyen de l'une desdites étapes (a):
a) 1 soit on imprègne un support d'alumine préformé ou non par une solution d'au moins un sel d'au moins un métal A selon la revendication 1,
a) 2 soit on hydrolyse au moins un alcoxyde d'aluminium et au moins un alcoxyde d'au moins un métal A,
a) 3 soit on fait réagir au moins un composé d'aluminium et au moins un composé d'au moins un métal A, afin de former un sol puis un hydrogel selon le procédé sol - gel,
a) 4 soit on fait réagir une solution aqueuse d'aluminium et d'au moins un composé d'au moins un métal A avec une solution aqueuse d'au moins un agent précipitant, afin de former au moins un coprécipité,
on lave éventuellement, le produit obtenu selon l'étape a)1, a)2, a)3 ou a)4, on le sèche, puis on l'active thermiquement à une température entre 750 et 808 °C, afin de former ledit aluminate,
a) 5 on utilise au moins un aluminate industriel d'au moins un métal A tel que calcium, baryum, strontium, magnésium et zinc,
b) on met en forme le produit obtenu selon l'étape a)1, a)2, a)3, a)4 ou a)5, s'il ne l'est déjà pas,
c) on réalise par échange ou par dépôt une imprégnation du produit résultant de l'étape b) par une solution d'au moins un sel de nickel et éventuellement par une solution d'au moins un sel de platine et/ou de palladium, dans des conditions telles qu'on obtient ledit oxyde de nickel et éventuellement ledit oxyde de platine et/ou de palladium imprégné sur le support,
d) on sèche au moins en partie l'eau à une température de 80 à 200 °C
e) on calcine en présence d'un gaz contenant de l'oxygène moléculaire à une température de 300 à 600 °C et on récupère la masse de captation.

5. Procédé de préparation selon la revendication 4, caractérisé en ce qu'on soumet la masse de captation à une étape de réduction en présence d'hydrogène moléculaire ou d'un gaz contenant de l'hydrogène moléculaire, à une température de 100 à 500 °C.

6. Procédé d'élimination d'arsenic et/ou de phosphore d'une charge d'hydrocarbures au moins en partie liquide les contenant, caractérisé en ce qu'on met en contact dans une zone réactionnelle ladite charge, de l'hydrogène moléculaire et ladite masse de captation selon l'une des revendications 4 ou 5 à une température de 110 à 250°C, sous une pression de 1 à 100 bars, à un débit volumique horaire (LHSV) rapporté au volume de masse de captation, compris entre 1 et 20 h⁻¹ et avec un débi horaire d'hydrogène de 0,5 à 10 litres par litre de charge, de préférence 1 à 5 litres par litre.

7. Procédé d'élimination d'arsenic et/ou de phosphore selon la revendication 6 dans lequel on régénère la masse de captation en la soumettant à une calcination sous atmosphère oxydante à 300 - 600 °C et dans lequel on réduit la masse de captation ainsi régénérée selon la revendication 5.

8. Procédé d'élimination d'arsenic et/ou de phosphore d'une charge d'hydrocarbures au moins en partie liquide les contenant, caractérisé en ce qu'on met en contact dans une zone réactionnelle ladite charge, de l'hydrogène moléculaire et une masse de captation selon l'une des revendications 1 à 3, à une température de 110 à 250°C, sous une pression de 1 à 100 bars, à un débit volumique horaire (LHSV) rapporté au volume de masse de captation compris entre 1 et 20h⁻¹ et avec un débit horaire d'hydrogène de 0,5 à 10 litres par litre de charge, de préférence 1 à 5 litres par litre.

9. Procédé selon la revendication 8, caractérisé en ce que la masse de captation selon l'une des revendications 1 à 3 est préalablement soumise à un traitement de réduction sous hydrogène, à une température comprise entre 100 et 500°C.

## Claims

1. A retaining material, particularly for removing arsenic and/or phosphorus from a petroleum charge, characterized in that it comprises, by weight :
a) from 60 to 97% of a porous carrier containing by weight :
- from 40 to 98.5% of at least one alumina
- from 1.5 to 60% of oxide of at least one metal A dissolved in alumina, in the form of aluminate, selected from the group formed by Mg, Ca, Sr, Ba, Mn, Fe, Co, Ni, Cu and Zn;
b) from 3 to 40% of nickel oxide, with which the carrier is impregnated by exchange or depositing, and not tranformed in aluminate.

2. The material of claim 1, characterized in that it further comprises from 0 to 1% by weight of platinum oxide and/or palladium oxide, with which the carrier is impregnated by exchange or depositing.

3. The material of claim 1 or 2, characterized in that it comprises, by weight :
a) from 65 to 90% of said carrier, containing :
- from 60 to 96% of said alumina,
- from 4 to 40% of said oxide of metal A;
b) from 10 to 35% of nickel oxide, with which said carrier is impregnated.

4. A method of preparing the retaining material of any of claims 1 to 3, characterized in that a carrier is prepared containing alumina and an aluminate by means of one of said steps (a):
a) 1 either impregnating a preformed or non-preformed alumina carrier with a solution of at least one salt of at least one metal A according to claim 1.
a) 2 hydrolysing at least one aluminium alkoxide and at least one alkoxide of at least one metal A.
a) 3 reacting at least one aluminium compound and at least one compound of at least one metal A, to form a sol then a hydrogel by the sol - gel process.
a) 4 or reacting an aqueous solution of aluminium and at least one compound of at least one metal A with an aqueous solution of at least one precipitating agent, to form at least one co-precipitate,
possibly washing the product obtained in stage a)1, a)2, a)3 or a)4, drying it, then thermally activating it at a temperature between 750°C and 800°C, to form said aluminate,
a) 5 or using at least one industrial aluminate of at least one metal A such as calcium, barium, strontium, magnesium and zinc,
b) forming the product obtained in stage a)1, a)2, a)3, a4, or a)5 if it is not already formed,
c) impregnating the product resulting from stage b), by exchange or depositing, with a solution of at least one nickel salt and possibly with a solution of at least one platinum and/or palladium salt, under conditions such that said nickel oxide and possibly said platinum and/or palladium oxide is obtained impregnated onto the carrier.
d) at least partly drying the water at a temperature of 80 to 200°C,
e) calcining in the presence of a gas containing molecular oxygen at a temperature of 300 to 600°C, and recovering the retaining material.

5. The preparation method of claim 4, characterized in that the retaining material is subjected to a reducing stage in the presence of molecular hydrogen or a gas containing molecular hydrogen, at a temperature of 100 to 500°C.

6. A process for removing arsenic and/or phosphorus from an at least partly liquid hydrocarbon charge containing them, characterized in that said charge, molecular hydrogen and said retaining material according to claim 4 or 5 are put into contact in a reaction zone, at a temperature of 110 to 250°C and a pressure of 1 to 100 bars, with an hourly throughput volume (LHSV) relative to the volume of retaining material, of from 1 to 20 h⁻¹ and with an hourly throughput of hydrogen of 0.5 to 10 litres and preferably 1 to 5 litres per litre of charge.

7. A process for removing arsenic and/or phosphorus according to claim 6, wherein the retaining material is regenerated by calcining it in an oxidizing atmosphere at 300 to 600°C, and wherein the retaining material thus regenerated is reduced according to claim 5.

8. A process for removing arsenic and/or phosphorus from an at least partly liquid hydrocarbon charge containing them, characterized in that said charge, molecular hydrogen and said retaining material according to claim 1 to 3 are put into contact in a reaction zone, at a temperature of 110 to 250°C and a pressure of 1 to 100 bars, with an hourly throughput volume (LHSV) relative to the volume of retaining material, of from 1 to 20 h⁻¹ and with an hourly throughput of hydrogen of 0.5 to 10 litres and preferably 1 to 5 litres per litre of charge.

9. A process according to claim 8, characterized in that the retaining material according to one of claims 1 to 3 is previously subjected to a reducing treatment in the presence of hydrogen, at a temperature ranging between 100 and 500°C.

## Patentansprüche

1. Einfangmasse, insbesondere zum Eliminieren von Arsen und/oder Phosphor aus einer Erdölcharge, dadurch gekennzeichnet, daß sie umfaßt in Gewicht:
a) von 60 bis 97 % eines porösen Trägers, enthaltend, (Gew.):
- von 40 bis 98,5 % wenigstens eines Aluminiumoxids,
- von 1,5 bis 60 % Oxid wenigstens eines Metalls A, das in Aluminiumoxid in Aluminatform gelöst ist und gewählt ist aus der Gruppe, die gebildet wird durch Mg, Ca, Sr, Ba, Mn, Fe, Co, Ni, Cu und Zn;
b) von 3 bis 40 % Nickeloxid, das durch Austausch oder durch Abscheidung auf dem Träger imprägniert und in Aluminat nicht ungeformt wurde.

2. Einfangmasse nach Anspruch 1, dadurch gekennzeichnet, daß sie im übrigen von 0 bis 1 Gew.-% Platinoxid und/oder Palladiumoxid umfaßt, das durch Austausch oder durch Abscheidung auf dem Träger imprägniert wurde.

3. Einfangmasse nach Anspruch 1 oder 2, dadurch gekennzeichnet, daß sie umfaßt, Gewicht:
a) von 65 bis 90 % dieses Trägers, enthaltend:
- von 60 bis 96 % dieses Aluminiumoxids,
- von 4 bis 40 % dieses Oxids des Metalls A;
b) von 10 bis 35 % Nickeloxid, das auf diesem Träger imprägniert wurde.

4. Verfahren zur Herstellung der Einfangmasse nach einem der Ansprüche 1 bis 3, dadurch gekennzeichnet, daß man einen Aluminiumoxid und ein Aluminat enthaltenden Träger mittels einer der folgenden Schritte (a) herstellt:
a) 1 entweder man imprägniert einen gegebenenfalls durch eine Lösung wenigstens eines Gels wenigstens eines Metalls A nach Anspruch 1 vorgeformten Aluminiumoxidträger,
a) 2 oder man hydrolisiert wenigstens ein Aluminiumalkoxid und wenigstens ein Alkoxid wenigstens eines Metalls A,
a) 3 oder man läßt wenigstens eine Aluminiumverbindung und wenigstens eine Verbindung wenigstens eines Metalls A reagieren, um ein Sol , dann ein Hydrogel nach dem SOL-GEL-Verfahren zu bilden,
a) 4 oder man läßt eine wässrige Lösung von Aluminium und wenigstens einer Verbindung wenigstens eines Metalls A mit einer wässrigen Lösung wenigstens eines Ausfällmittels reagieren, um wenigstens ein Kopräzipitat zu bilden,
gegebenenfalls wäscht man das gemäß Stufe a)1, a)2, a)3 oder a)4 erhaltene Produkt, man trocknet es, dann aktiviert man es thermisch bei einer Temperatur zwischen 750°C und 800°C, um dieses Aluminat zu bilden,
a) 5 man verwendet wenigstens ein industrielles Aluminat wenigstens eines Metalls A wie Kalzium, Barium, Strontium, Magnesium und Zink,
b) man formt das gemäß Stufe a)1, a)2, a)3, a)4 oder a)5 erhaltene Produkt, wenn dies nicht schon geschehen ist,
c) man führt durch Austausch oder Abscheidung eine Imprägnierung des aus der Stufe b) stammenden Produkts durch eine Lösung wenigstens eines Salzes von Nickel und gegebenenfalls durch eine Lösung wenigstens eines Platin- und/oder Palladiumsalzes unter Bedingungen derarart herbei, daß man dieses Nickeloxid und gegebenenfalls Platin- und/oder Palladiumoxid imprägniert auf dem Träger erhält,
d) man trocknet wenigstens zum Teil das Wasser bei einer Temperatur von 80 bis 200°C und
e) man kalziniert in Anwesenheit eines molekularen Sauerstoff enthaltenden Gases bei einer Temperatur von 300 bis 600°C und man gewinnt die Einfangmasse.

5. Herstellungsverfahren gemäß Anspruch 4, dadurch gekennzeichnet, daß man die Einfangmasse einer Reduktionsstufe in Anwesenheit von molekularem Wasserstoff oder von einem molekularen Wasserstoff enthaltenden Gas bei einer Temperatur von 100 bis 500°C, aussetzt.

6. Verfahren zum Eliminieren von Arsen und/oder Phosphor aus einer wenigstens zum Teil flüssigen sie enthaltenden Charge von Kohlenwasserstoffen, dadurch gekennzeichnet, daß man in einer Reaktionszone diese Charge aus molekularem Wasserstoff sowie diese Einfangmasse nach einem der Ansprüche 4 oder 5 einer Temperatur von 110 bis 250°C unter einem Druck von 1 bis 100 bar bei einem stündlichen Volumendurchsatz (LHSV), bezogen auf das Volumen der Einfangmasse, zwischen 1 und 20 h⁻¹ sowie mit einem stündlichen Durchsatz von Wasserstoff von 0,5 bis 10 Litern pro Liter Charge, vorzugsweise 1 bis 5 Litern pro Liter, kontaktiert.

7. Verfahren zum Eliminieren von Arsen und/oder Phosphor nach Anspruch 6, bei dem man die Einfangmasse regeneriert, indem man sie einer Kalzinierung unter oxidierender Atmosphäre bei 300 bis 600°C aussetzt und wobei man die so regenerierte Einfangmasse nach Anspruch 5 reduziert.

8. Verfahren zum Eliminieren von Arsen und/oder Phosphor aus einer wenigstens zum Teil flüssigen sie enthaltenden Charge von Kohlenwasserstoffen, dadurch gekennzeichnet, daß man in einer Reaktionszone diese Charge aus molekularem Wasserstoff sowie eine Einfangmasse nach einem der Ansprüche 1 bis 3 einer Temperatur von 110 bis 250°C unter einem Druck von 1 bis 100 bar bei einem stündlichen Volumendurchsatz (LHSV), bezogen auf das Volumen der Einfangmasse, zwischen 1 und 20 h⁻¹ und mit einem stündlichen Durchsatz von Wasserstoff von 0,5 bis 10 Litern pro Liter Charge, vorzugsweise 1 bis 5 Litern pro Liter, kontaktiert.

9. Verfahren nach Anspruch 8, dadurch gekennzeichnet, daß die Einfangmasse nach einem der Ansprüche 1 bis 3 vorher einer Reduktionsbehandlung unter Wasserstoff bei einer Temperatur zwischen 100 und 500°C ausgesetzt wird.
